# EUROPÄISCHE PATENTSCHRIFT

(11) **EP 3 527 439 B1**
(45) Veröffentlichungstag und Bekanntmachung des Hinweises auf die Patenterteilung: **19.08.2020**
(21) Anmeldenummer: 19155670.3
(22) Anmeldetag: 06.02.2019
(51) Int. Cl.: B60R 21/217, B60R 21/207

(54) **MODULGEHÄUSE EINES GASSACKMODULS SOWIE GASSACKMODUL UND FAHRZEUGSITZ MIT EINEM SOLCHEN GASSACKMODUL**
AIRBAG MODULE AND MODULE HOUSING OF AN AIRBAG MODULE AND VEHICLE SEAT WITH SUCH A MODULE
BOÎTIER DE MODULE D'UN MODULE DE SAC À GAZ ET MODULE DE SAC À GAZ ET SIÈGE DE VÉHICULE DOTÉ D'UN TEL MODULE DE SAC À GAZ

(30) Priorität: 16.02.2018 DE 202018100871 U
(43) Veröffentlichungstag der Anmeldung: 21.08.2019
(73) Patentinhaber: Dalphi Metal España, S.A., 36213 Vigo (ES)
(72) Erfinder: Duarte De Arez, Luis José, 47015 Valladolid (ES); Perez, Diego, 47195 Arroyo de la Encomienda (ES); Miranda, Carlos, 47008 Valladolid (ES)
(74) Vertreter: ZF Patentabteilung - DIPS

(56) Entgegenhaltungen:
- EP-A2- 0 875 425
- DE-A1- 10 045 804
- DE-A1-102006 007 301

## Beschreibung

Die Erfindung betrifft ein Modulgehäuse eines Gassackmoduls, mit einer Gehäusewand, die im geschlossenen Zustand des Modulgehäuses ein Gehäuseinneres von einer Gehäuseumgebung trennt, wobei die Gehäusewand einen Gehäusevorsprung aufweist, welcher von der Gehäusewand in Richtung zur Gehäuseumgebung vorsteht, und wobei der Gehäusevorsprung wenigstens eine Kante mit einem Kantenradius von weniger als 3,5 mm aufweist.

Gassackmodule sind zum Schutz von Fahrzeuginsassen üblicherweise im Innenraum eines Fahrzeugs angeordnet und können zum Beispiel bei extremen Fahrzeugverzögerungen über ihre Modulgehäuse mit einem Fahrzeuginsassen in Berührung kommen. Dies gilt insbesondere für Gassackmodule, die in den Fahrer-oder Beifahrersitz integriert sind und in Extremsituationen von einem Fondspassagier kontaktiert werden können.

Um Beeinträchtigungen des Insassen bei einem etwaigen Kontakt möglichst gering zu halten, weist das Modulgehäuse möglichst abgerundete Ecken und Kanten auf. Dabei gilt ein Kantenradius in der Größenordnung von wenigstens etwa 3,5 mm als akzeptabel, wohingegen Gehäuseabschnitte mit einem Kantenradius von weniger als 3,2 mm als scharfkantig gelten und zu vermeiden sind. Unter Umständen ist jedoch eine solche Kantenabrundung nicht bei allen Gehäusedetails des Gassackmoduls möglich.

Die DE102006007301 offenbart ein Modulgehäuse eines Gassackmoduls nach dem Oberbegriff des Anspruchs 1.

Aufgabe der Erfindung ist daher die Schaffung eines Gassackmoduls, bei dem ein Insassenkontakt mit spitzen Ecken oder scharfen Kanten des Modulgehäuses soweit als möglich ausgeschlossen ist.

Erfindungsgemäß wird diese Aufgabe gelöst durch ein Modulgehäuse der eingangs genannten Art, wobei benachbart zur Kante mit einem Kantenradius von weniger als 3,5 mm ein einstückig mit der Gehäusewand ausgebildeter Wandfortsatz vorgesehen ist, welcher ausschließlich Kanten mit einem Kantenradius von mehr als 3,2 mm aufweist und von der Gehäusewand wenigstens so weit in Richtung zur Gehäuseumgebung vorsteht wie der Gehäusevorsprung.

Der Gehäusevorsprung ist in einer Ausführungsform des Gassackmoduls ein langgestreckter Gehäusevorsprung mit einer im Wesentlichen parallel zur Gehäusewand verlaufenden Vorsprungachse und erstreckt sich von einem ersten axialen Vorsprungende zu einem entgegengesetzten zweiten axialen Vorsprungende, wobei der Gehäusevorsprung an wenigstens einem axialen Vorsprungende eine Kante mit einem Kantenradius von weniger als 3,5 mm, insbesondere weniger als 3,2 mm aufweist, und wobei der einstückig mit der Gehäusewand ausgebildete Wandfortsatz axial angrenzend an das wenigstens eine axiale Vorsprungende vorgesehen ist. Mit anderen Worten bildet der vorgelagerte Wandfortsatz somit einen Kontaktschutz für einen scharfkantigen Gehäuseabschnitt.

Vorzugsweise deckt der Wandfortsatz dabei den Gehäusevorsprung in axialer Projektion vollständig ab.

Ferner weist der Wandfortsatz von der Kante des Gehäusevorsprungs mit einem Kantenradius von weniger als 3,5 mm bevorzugt einen axialen Abstand von maximal 30 mm, insbesondere maximal 15 mm auf. Durch die große Nähe des Wandfortsatzes zur scharfen Kante des Gehäusevorsprungs wird der Kontaktschutz weiter verbessert.

Gemäß einer weiteren Ausführungsform des Gassackmoduls steht der Wandfortsatz von der Gehäusewand wenigstens 1 mm, insbesondere wenigstens 3 mm weiter in Richtung zur Gehäuseumgebung vor als der Gehäusevorsprung. Auch durch diesen Überstand wird der Kontaktschutz weiter verbessert.

Das Modulgehäuse des Gassackmoduls kann aus Kunststoff, insbesondere aus einem faserverstärkten Kunststoff hergestellt sein.

Vorzugsweise ist der Gehäusevorsprung einstückig mit der Gehäusewand ausgeführt, wodurch sich eine einfache und preiswertige Fertigung des Modulgehäuses ergibt.

Konkret kann der Gehäusevorsprung ein Filmscharnier sein, welches zum Beispiel einen Gehäuseboden mit einem Gehäusedeckel des Modulgehäuses verbindet, insbesondere einstückig verbindet.

Erfindungsgemäß wird die gestellte Aufgabe auch durch ein Modulgehäuse der eingangs genannten Art gelöst, bei dem die Gehäusewand einen Wandfortsatz aufweist, der ausschließlich Kanten mit einem Kantenradius von mehr als 3,2 mm aufweist und so angeordnet und dimensioniert ist, dass eine imaginäre Testkugel mit einem Kugeldurchmesser von 165 mm in jeder beliebigen Kugelposition von den Kanten des Gehäusevorsprungs mit einem Kantenradius von weniger als 3,5 mm, insbesondere von weniger als 3,2 mm, beabstandet ist.

Die Erfindung umfasst ferner ein Gassackmodul für ein Kraftfahrzeug, mit einem Gassack, einem Gasgenerator zum Aufblasen des Gassacks und einem oben beschriebenen Modulgehäuse, in welchem der Gasgenerator und der Gassack im gefalteten Zustand aufgenommen sind.

Schließlich betrifft die Erfindung auch einen Fahrzeugsitz mit einem solchen Gassackmodul, wobei das Gassackmodul in einer Rückenlehne des Fahrzeugsitzes untergebracht und der Gassack ein Seitengassack ist.

Weitere Merkmale und Vorteile der Erfindung ergeben sich aus ergeben sich aus der nachfolgenden Beschreibung bevorzugter Ausführungsformen unter Bezugnahme auf die Zeichnungen. In diesen zeigt:
- Figur 1 eine perspektivische Ansicht eines Fahrzeugsitzes mit einem erfindungsgemäßen Gassackmodul und einer Testkugel;
- Figur 2 ein schematisches Schnittdetail des Fahrzeugsitzes gemäß Figur 1 im Kontaktbereich zwischen Gassackmodul und Testkugel;
- Figur 3 eine schematische Schnittansicht des Fahrzeugsitzes gemäß Figur 1 im Bereich des am Fahrzeugsitz montierten Gassackmoduls;
- Figur 4 eine perspektivische Ansicht eines erfindungsgemäßen Gassackmoduls mit einem erfindungsgemäßen Modulgehäuse;
- Figur 5 eine Detailansicht des Gassackmoduls gemäß Figur 4 im Bereich eines Wandfortsatzes des Modulgehäuses; und
- Figur 6 eine weitere Detailansicht des Gassackmoduls gemäß Figur 4 im Bereich eines Wandfortsatzes des Modulgehäuses.

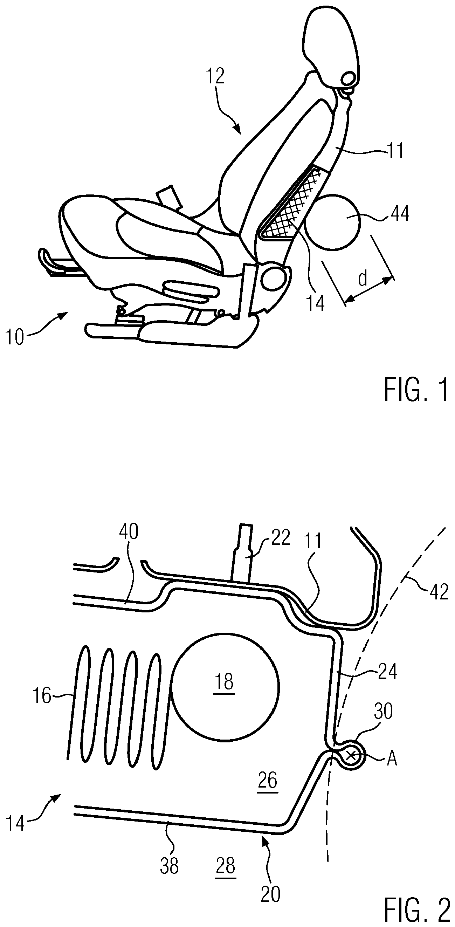

Die Figur 1 zeigt einen Fahrzeugsitz 10 ohne Sitzbezug, insbesondere einen Fahrer- oder Beifahrersitz, wobei in einer Rückenlehne 12 des Fahrzeugsitzes 10 ein Gassackmodul 14 untergebracht ist.

Das Gassackmodul 14 weist einen in Figur 2 schematisch angedeuteten Gassack 16, einen Gasgenerator 18 zum Aufblasen des Gassacks 16 und ein Modulgehäuse 20 auf, in welchem der Gasgenerator 18 und der Gassack 16 im gefalteten Zustand aufgenommen sind. Der Gassack 16 ist dabei ein Seitengassack, der sich im aufgeblasenen Zustand seitlich eines im Fahrzeugsitz 10 sitzenden Fahrzeuginsassen erstreckt.

Das Gassackmodul 14 ist fest mit einem Rahmen 11 des Fahrzeugsitzes 10 verbunden, beispielsweise durch Befestigungsbolzen 22, wie sie in den Figuren 2 bis 4 dargestellt sind.

Das Modulgehäuse 20 des Gassackmoduls 14 ist im dargestellten Ausführungsbeispiel aus Kunststoff, insbesondere aus einem faserverstärkten Kunststoff hergestellt und umfasst eine Gehäusewand 24, die im geschlossenen Zustand des Modulgehäuses 20 ein Gehäuseinneres 26 von einer Gehäuseumgebung 28 trennt. Die Gehäusewand 24 weist einen Gehäusevorsprung 30 auf, welcher von der Gehäusewand 24 in Richtung zur Gehäuseumgebung 28 vorsteht, wobei der Gehäusevorsprung 30 wenigstens eine Kante 32 mit einem Kantenradius von weniger als 3,5 mm, insbesondere von weniger als 3,2 mm aufweist.

Benachbart zu der Kante 32 mit einem Kantenradius von weniger als 3,5 mm ist ein einstückig mit der Gehäusewand 24 ausgebildeter Wandfortsatz 34 vorgesehen, der ausschließlich Kanten mit einem Kantenradius von mehr als 3,2 mm aufweist und von der Gehäusewand 24 wenigstens so weit in Richtung zur Gehäuseumgebung 28 vorsteht wie der Gehäusevorsprung 30.

Der Gehäusevorsprung 30 ist im vorliegenden Ausführungsbeispiel des Modulgehäuses 20 ein langgestreckter Gehäusevorsprung 30 mit einer im Wesentlichen parallel zur Gehäusewand 24 verlaufenden Vorsprungachse A und erstreckt sich von einem axialen Vorsprungende 36 zu einem (nicht dargestellten) entgegengesetzten axialen Vorsprungende 36, wobei der Gehäusevorsprung 30 an wenigstens einem axialen Vorsprungende 36 eine Kante 32 mit einem Kantenradius von weniger als 3,5 mm, insbesondere von weniger als 3,2 mm aufweist. Der Wandfortsatz 34 grenzt dabei axial an das wenigstens eine axiale Vorsprungende 36 an und deckt den Gehäusevorsprung 30 in axialer Projektion insbesondere vollständig ab.

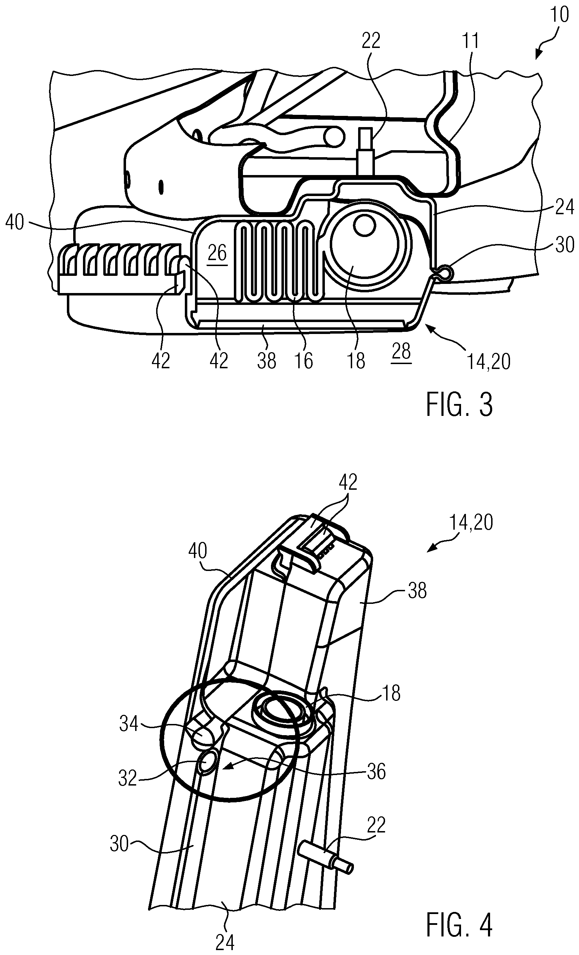

Konkret ist der Gehäusevorsprung 30 in der dargestellten Ausführungsform des Modulgehäuses 20 ein einstückig mit der Gehäusewand 24 ausgebildetes Filmscharnier, welches einen Gehäuseboden 38 mit einem Gehäusedeckel 40 des Modulgehäuses (einstückig) verbindet. Auf der dem Filmscharnier gegenüberliegenden Seite des Modulgehäuses 20 sind an der Gehäusewand 24, konkret am Gehäuseboden 38 und am Gehäusedeckel 40, Rastelemente 42 vorgesehen, insbesondere angeformt, die eine Rastverbindung ausbilden können, um das Modulgehäuse 20 gemäß Figur 3 in einem geschlossenen Zustand zu halten.

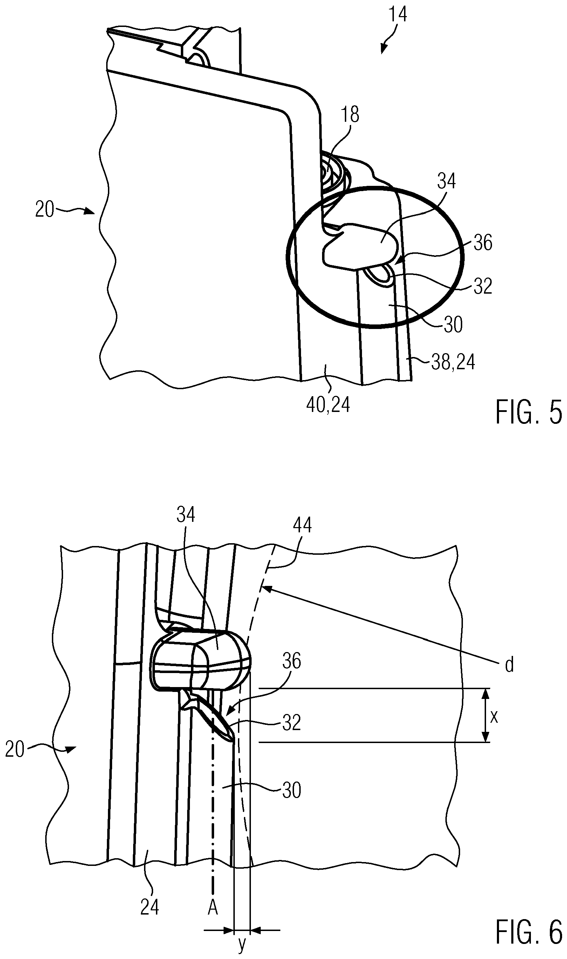

Die Figur 6 zeigt eine Detailansicht des Modulgehäuses 20 im Bereich eines axialen Vorsprungendes 36. Hierbei wird deutlich, dass der Wandfortsatz 34 von der Kante 32 des Gehäusevorsprungs 30 mit einem Kantenradius von weniger als 3,5 mm einen axialen Abstand x von maximal 30 mm, insbesondere maximal 15 mm aufweist. Ferner beträgt ein Maß y, um welches der Wandfortsatz 34 von der Gehäusewand 24 in Richtung zur Gehäuseumgebung 28 weiter vorsteht als der Gehäusevorsprung 30 wenigstens 1 mm, insbesondere wenigstens 3 mm.

Die obengenannten strukturellen Ausgestaltungen führen funktional zu einem Modulgehäuse 20, bei dem die Gehäusewand 24 einen Wandfortsatz 34 umfasst, der ausschließlich Kanten mit einem Kantenradius von mehr als 3,2 mm aufweist sowie derart angeordnet und dimensioniert ist, dass eine in den Figuren 1, 2 und 6 angedeutete imaginäre Testkugel 44 mit einem Kugeldurchmesser d von 165 mm in jeder beliebigen Kugelposition von den Kanten 32 des Gehäusevorsprungs 30 mit einem Kantenradius von weniger als 3,5 mm, insbesondere weniger als 3,2 mm beabstandet ist.

Insgesamt wird durch den Wandfortsatz 34 verhindert, dass zum Beispiel bei einer starken Fahrzeugverzögerung ein scharfkantiger Abschnitt des Modulgehäuses 20 auf ein durch die imaginäre Testkugel 44 symbolisiertes Körperteil eines Fondspassagiers einwirkt.

## Patentansprüche

1. Modulgehäuse eines Gassackmoduls (14), mit
einer Gehäusewand (24), die im geschlossenen Zustand des Modulgehäuses (20) ein Gehäuseinneres (26) von einer Gehäuseumgebung (28) trennt,
wobei die Gehäusewand (24) einen Gehäusevorsprung (30) aufweist, welcher von der Gehäusewand (24) in Richtung zur Gehäuseumgebung (28) vorsteht,
wobei der Gehäusevorsprung (30) wenigstens eine Kante (32) mit einem Kantenradius von weniger als 3,5 mm aufweist,
**dadurch gekennzeichnet, dass** benachbart zu dieser wenigstens einen Kante (32) ein einstückig mit der Gehäusewand (24) ausgebildeter Wandfortsatz (34) vorgesehen ist, welcher ausschließlich Kanten mit einem Kantenradius von mehr als 3,2 mm aufweist und von der Gehäusewand (24) wenigstens so weit in Richtung zur Gehäuseumgebung (28) vorsteht wie der Gehäusevorsprung (30).

2. Modulgehäuse nach Anspruch 1, **dadurch gekennzeichnet, dass** der Gehäusevorsprung (30) ein langgestreckter Gehäusevorsprung (30) mit einer im Wesentlichen parallel zur Gehäusewand (24) verlaufenden Vorsprungachse (A) ist und sich von einem axialen Vorsprungende (36) zu einem entgegengesetzten axialen Vorsprungende (36) erstreckt, wobei der Gehäusevorsprung (30) an wenigstens einem der axialen Vorsprungenden (36) eine Kante (32) mit einem Kantenradius von weniger als 3,5 mm aufweist, und wobei der einstückig mit der Gehäusewand (24) ausgebildete Wandfortsatz (34) axial angrenzend an das wenigstens eine axiale Vorsprungende (36) vorgesehen ist.

3. Modulgehäuse nach Anspruch 2, **dadurch gekennzeichnet, dass** der Wandfortsatz (34) den Gehäusevorsprung (30) in axialer Projektion vollständig abdeckt.

4. Modulgehäuse nach Anspruch 2 oder 3, **dadurch gekennzeichnet, dass** der Wandfortsatz (34) von der Kante (32) des Gehäusevorsprungs (30) mit einem Kantenradius von weniger als 3,5 mm einen axialen Abstand (x) von maximal 30 mm, insbesondere maximal 15 mm aufweist.

5. Modulgehäuse nach einem der vorhergehenden Ansprüche, **dadurch gekennzeichnet, dass** der Wandfortsatz (34) von der Gehäusewand (24) wenigstens 1 mm, insbesondere wenigstens 3 mm weiter in Richtung zur Gehäuseumgebung (28) vorsteht als der Gehäusevorsprung (30).

6. Modulgehäuse nach einem der vorhergehenden Ansprüche, **dadurch gekennzeichnet, dass** das Modulgehäuse (20) aus Kunststoff, insbesondere aus einem faserverstärkten Kunststoff hergestellt ist.

7. Modulgehäuse nach einem der vorhergehenden Ansprüche, **dadurch gekennzeichnet, dass** der Gehäusevorsprung (30) einstückig mit der Gehäusewand (24) ausgeführt ist.

8. Modulgehäuse nach einem der vorhergehenden Ansprüche, **dadurch gekennzeichnet, dass** der Gehäusevorsprung (30) ein Filmscharnier ist.

9. Modulgehäuse nach dem Oberbegriff des Anspruchs 1 oder nach einem der vorhergehenden Ansprüche, **dadurch gekennzeichnet, dass** die Gehäusewand (24) einen Wandfortsatz (34) aufweist, der ausschließlich Kanten mit einem Kantenradius von mehr als 3,2 mm aufweist und so angeordnet und dimensioniert ist, dass eine imaginäre Testkugel (44) mit einem Kugeldurchmesser (d) von etwa 165 mm in jeder beliebigen Kugelposition von den Kanten (32) des Gehäusevorsprungs (30) mit einem Kantenradius von weniger als 3,5 mm beabstandet ist.

10. Gassackmodul für ein Kraftfahrzeug, mit
einem Gassack (16),
einem Gasgenerator (18) zum Aufblasen des Gassacks (16) und
einem Modulgehäuse (20) nach einem der vorhergehenden Ansprüche, in welchem der Gasgenerator (18) und der Gassack (16) im gefalteten Zustand aufgenommen sind.

11. Fahrzeugsitz mit einem Gassackmodul (14) nach Anspruch 10, wobei das Gassackmodul (14) in einer Rückenlehne (12) des Fahrzeugsitzes (10) untergebracht und der Gassack (16) ein Seitengassack ist.

## Claims

1. A module casing of an airbag module (14) comprising
a casing wall (24) which in the closed state of the module casing (20) separates a casing interior (26) from a casing environment (28),
wherein the casing wall (24) includes a casing projection (30) which projects from the casing wall (24) in the direction of the casing environment (28),
wherein the casing projection (30) includes at least one edge (32) having an edge radius of less than 3.5 mm,
**characterized in that**, adjacent to said at least one edge (32), a wall extension (34) formed integrally with the casing wall (24) is provided which includes exclusively edges having an edge radius of more than 3.2 mm and protrudes from the casing wall (24) in the direction of the casing environment (28) at least as far as the casing projection (30).

2. The module casing according to claim 1, **characterized in that** the casing projection (30) is an elongate casing projection (30) having a projection axis (A) extending substantially in parallel to the casing wall (24) and extending from an axial projection end (36) to an opposite axial projection end (36), wherein the casing projection (30) includes an edge (32) having an edge radius of less than 3.5 mm on at least one of the axial projection ends (36), and wherein the wall extension (34) formed integrally with the casing wall (24) is provided to be axially adjacent to the at least one axial projection end (36).

3. The module casing according to claim 2, **characterized in that** the wall extension (34) completely covers the casing projection (30) in axial projection.

4. The module casing according to claim 2 or 3, **characterized in that** the wall extension (34) has an axial distance (x) of a maximum of 30 mm, especially 15 mm, from the edge (32) of the casing projection (30) having an edge radius of less than 3.5 mm.

5. The module casing according to any one of the preceding claims, **characterized in that** the wall extension (34) protrudes from the casing wall (24) in the direction of the casing environment (28) by at least 1 mm, especially at least 3 mm, further than the casing projection (30).

6. The module casing according to any one of the preceding claims, **characterized in that** the module casing (20) is made from plastic, especially from fiber-reinforced plastic.

7. The module casing according to any one of the preceding claims, **characterized in that** the casing projection (30) is formed integrally with the casing wall (24).

8. The module casing according to any one of the preceding claims, **characterized in that** the casing projection (30) is a film hinge.

9. The module casing according to the preamble of claim 1 or according to any one of the preceding claims, **characterized in that** the casing wall (24) has a wall extension (34) which includes exclusively edges having an edge radius of more than 3.2 mm and is arranged and dimensioned so that an imaginary test ball (44) having a ball diameter (d) of about 165 mm in any ball position is spaced apart from the edges (32) of the casing projection (30) having an edge radius of less than 3.5 mm.

10. An airbag module for an automotive vehicle comprising
an airbag (16),
a gas generator (18) for inflating the airbag (16) and
a module casing (20) according to any one of the preceding claims in which the gas generator (18) and the airbag (16) in the folded state are accommodated.

11. A vehicle seat comprising an airbag module (14) according to claim 10, wherein the airbag module (14) is accommodated in a backrest (12) of the vehicle seat (10) and the airbag (16) is a side airbag.

## Revendications

1. Boîtier de module d'un module airbag (14), avec
une paroi de boîtier (24) qui, lorsque le boîtier de module (20) est fermé, sépare l'intérieur du boîtier (26) d'un environnement du boîtier (28),
pour lequel la paroi de boîtier (24) présente une extension de boîtier (30) laquelle fait saillie à partir de la paroi de boîtier (24) en direction de l'environnement de boîtier (28),
pour lequel l'extension de boîtier (30) a au moins un bord (32) avec un rayon de bord inférieur à 3,5 mm,
**caractérisé en ce qu'**à côté d'au moins un bord (32) est prévue une extension de paroi (34) qui est formée d'une seule pièce avec la paroi du boîtier (24), laquelle possède exclusivement des bords avec un rayon de bord supérieur à 3,2 mm et à partir de la paroi du boîtier (24) fait saillie au moins aussi loin en direction de l'environnement du boitier (28) que l'extension de boitier (30).

2. Boîtier de module selon la revendication 1, **caractérisé en ce que** l'extension de boîtier (30) est une extension de boîtier étendue en longueur (30) avec un axe d'extension (A) s'étendant essentiellement parallèlement à la paroi de boîtier (24) et qui s'étend d'une extrémité d'extension axiale (36) à une extrémité d'extension axiale (36) opposée, pour lequel l'extension de boîtier (30) présente au moins à une des extrémités d'extension axiale (36) un bord (32) avec un rayon de bord inférieur à 3,5 mm, et pour lequel l'extension de paroi (34) qui est formée d'un seul tenant avec la paroi du boîtier (24) est prévue adjacente axialement à au moins une des extrémités d'extension axiale (36).

3. Boîtier de module selon la revendication 2, **caractérisé en ce que** l'extension de paroi (34) recouvre complètement l'extension de boîtier (30) en projection axiale.

4. Boîtier de module selon la revendication 2 ou 3, **caractérisé en ce que** l'extension de paroi (34) présente à partir du bord (32) de l'extension de boîtier (30) un rayon de bord inférieur à 3,5 mm et une distance axiale (x) d'un maximum de 30 mm, plus particulièrement un maximum de 15 mm .

5. Boîtier de module selon l'une des revendications précédentes, **caractérisé en ce que** l'extension de paroi (34) dépasse de la paroi de boîtier (24) d'au moins 1 mm, en particulier d'au moins 3 mm de plus en direction de l'environnement du boîtier (28) que l'extension du boîtier (30).

6. Boîtier de module selon l'une des revendications précédentes, **caractérisé en ce que** le boîtier de module (20) est en matière plastique, notamment en matière plastique renforcée de fibres.

7. Boîtier de module selon l'une des revendications précédentes, **caractérisé en ce que** l'extension de boîtier (30) est réalisée d'une seule pièce avec la paroi de boîtier (24).

8. Boîtier de module selon l'une des revendications précédentes, **caractérisé en ce que** l'extension de boîtier (30) est une charnière souple.

9. Boîtier de module selon les termes de la revendication 1 ou selon l'une des revendications précédentes, **caractérisé en ce que** la paroi de boîtier (24) présente une extension de paroi (34), laquelle ne présente que des bords avec un rayon de bord supérieur à 3,2 mm et ainsi agencés et dimensionnés, qu'une bille d'essai imaginaire (44) avec un diamètre de bille (d) d'environ 165 mm est espacée, dans n'importe quelle position de bille, des bords (32) de l'extension de boîtier (30) avec un rayon de bord inférieur à 3,5 mm .

10. Module airbag pour véhicule automobile, avec
un coussin gonflable (16),
un générateur de gaz (18) pour gonfler le coussin gonflable (16) et
un boîtier de module (20) selon l'une des revendications précédentes, pour lequel le générateur de gaz (18) et le coussin gonflable (16) à l'état plié sont logés.

11. Siège de véhicule avec un module airbag (14) selon la revendication 10, pour lequel le module airbag (14) est logé dans un dossier (12) du siège de véhicule (10) et l'airbag (16) est un airbag latéral.
